# FASCICULE DE BREVET EUROPEEN

(11) **EP 2 959 530 B1**
(45) Date de publication et mention de la délivrance du brevet: **15.03.2017**
(21) Numéro de dépôt: 14705500.8
(22) Date de dépôt: 18.02.2014
(51) Int. Cl.: H01M 10/0525, H01M 10/0569, H01M 4/38, H01M 10/0567, H01M 10/42

(54) **CELLULE ÉLECTROCHIMIQUE POUR BATTERIE LITHIUM-ION COMPRENANT UNE ÉLECTRODE NÉGATIVE À BASE DE SILICIUM ET UN ÉLECTROLYTE SPÉCIFIQUE**
ELEKTROCHEMISCHE ZELLE FÜR EINE LITHIUM-IONEN-BATTERIE MIT EINER NEGATIVELEKTRODE AUS SILICIUM UND EINEM SPEZIFISCHEN ELEKTROLYT
ELECTROCHEMICAL CELL FOR A LITHIUM-ION BATTERY INCLUDING A NEGATIVE ELECTRODE MADE OF SILICON AND A SPECIFIC ELECTROLYTE

(30) Priorité: 19.02.2013 FR 1351412
(43) Date de publication de la demande: 30.12.2015
(73) Titulaire: Commissariat à l'Énergie Atomique et aux Énergies Alternatives, 75015 Paris (FR)
(72) Inventeur: MARTIN, Jean-Frédéric, 38140 Renage (FR); BOUTAFA, Laura, F-38130 Echirolles (FR)
(74) Mandataire: Brevalex
(86) Numéro de dépôt international: PCT/EP2014/053158
(87) Numéro de publication internationale: WO 2014/128130

(56) Documents cités:
- EP-A2- 2 355 213
- WO-A1-2012/057311
- JP-A- 2005 267 857
- JP-A- 2010 238 385
- US-A1- 2009 214 938
- US-A1- 2010 233 549
- US-A1- 2011 250 509
- US-A1- 2012 313 570
- MICHAEL S. DING: "Liquid-Solid Phase Diagrams of Ternary and Quaternary Organic Carbonates", JOURNAL OF THE ELECTROCHEMICAL SOCIETY, vol. 151, no. 5, 1 janvier 2004 (2004-01-01), page A731, XP055075197, ISSN: 0013-4651, DOI: 10.1149/1.1690782
- MICHAEL S. DING ET AL: "Liquid-Solid Phase Diagrams of Binary Carbonates for Lithium Batteries", JOURNAL OF THE ELECTROCHEMICAL SOCIETY, vol. 147, no. 5, 1 janvier 2000 (2000-01-01), page 1688, XP055075256, ISSN: 0013-4651, DOI: 10.1149/1.1393419

## Description

### DOMAINE TECHNIQUE

La présente invention a trait à une cellule de batterie lithium-ion originale comprenant une électrode négative à base de silicium basée notamment sur l'utilisation d'un électrolyte complexe permettant, notamment, d'obtenir d'excellentes performances en termes de réversibilité à basse température.

Le domaine général de l'invention peut être ainsi défini comme étant celui des batteries du type lithium-ion.

Les batteries du type lithium-ion sont de plus en plus utilisées comme source d'énergie autonome, en particulier, dans les équipements électroniques portables (tels que les téléphones mobiles, les ordinateurs portables, l'outillage), où elles remplacent progressivement les batteries nickel-cadmium (NiCd) et nickel-hydrure métallique (NiMH). Elles sont également très utilisées pour fournir l'alimentation en énergie nécessaire aux nouvelles microapplications, telles que les cartes à puce, les capteurs ou autres systèmes électromécaniques.

Les batteries du type lithium-ion fonctionnent sur le principe d'insertion-désinsertion (ou lithiation-délithiation) du lithium selon le principe suivant.

Lors de la décharge de la batterie, le lithium désinséré de l'électrode négative sous forme ionique Li⁺ migre à travers l'électrolyte conducteur ionique et vient s'intercaler dans le réseau cristallin du matériau actif de l'électrode positive. Le passage de chaque ion Li⁺ dans le circuit interne de la batterie est exactement compensé par le passage d'un électron dans le circuit externe, générant ainsi un courant électrique. La densité d'énergie massique libérée par ces réactions est à la fois proportionnelle à la différence de potentiel entre les deux électrodes et à la quantité de lithium qui se sera intercalée dans le matériau actif de l'électrode positive.

Lors de la charge de la batterie, les réactions se produisant au sein de la batterie sont les réactions inverses de la décharge, à savoir que :
- l'électrode négative va insérer du lithium dans le réseau du matériau la constituant ; et
- l'électrode positive va libérer du lithium.

De par ce principe de fonctionnement, les batteries du type lithium-ion nécessitent deux composés d'insertion différents à l'électrode négative et à l'électrode positive.

L'électrode positive est généralement à base d'oxyde lithié de métal de transition :
- du type oxyde lamellaire de formule LiMO₂, où M peut désigner Co, Ni, Mn, Al et des mélanges de ceux-ci, tel que LiCoO₂, LiNiO₂, Li(Ni,Co,Mn,Al)O₂;
- du type oxyde de structure spinelle, tel que LiMn₂O₄; ou
- du type phosphate de fer, tel que LiM¹PO₄ avec M¹ étant choisi parmi Fe, Mn, Co et les mélanges de ceux-ci.

L'électrode négative peut être à base d'un matériau carboné, et en particulier à base de graphite.

Le graphite présente une capacité spécifique théorique de l'ordre de 370 mAh/g (correspondant à la formation de l'alliage LiC₆) et une capacité spécifique pratique de l'ordre de 320 mAh/g.

Toutefois, le graphite présente une forte irréversibilité lors de la première charge, une perte continue de capacité en cyclage et peut présenter des performances limitées, notamment à basses températures, avec des électrolytes liquides, car la diffusion des électrolytes liquides au sein du graphite constitue un facteur limitant. En sus de ces inconvénients s'ajoutent les défauts inhérents à l'utilisation des électrolytes liquides, pour les applications basses températures, tels que le mauvais transport ionique dans l'électrolyte et les phénomènes de résistance interfaciale.

Ces différents phénomènes conduisent à une polarisation importante pouvant conduire à une coupure précoce de la batterie en charge/décharge avec la possibilité d'atteindre des potentiels très bas, voire négatifs, sur l'électrode négative pendant la charge.

En vue d'améliorer les performances à basse température des batteries lithium-ion comportant une électrode négative à base de graphite, les chercheurs ont axé leur recherche sur la conception de nouveaux électrolytes, en jouant sur la nature des constituants desdits électrolytes, de sorte à modifier ses propriétés, telles que, par exemple :
- les propriétés de viscosité en utilisant des mélanges spécifiques de solvants carbonates, qui visent à diminuer la viscosité des électrolytes ;
- les propriétés de transferts de charges en utilisant des sels de lithium spécifiques tels que LiBF₄, comme décrit dans, Zhang et al., Electrochemistry communications 4, n°11, 2002 ;
- les propriétés de transport au travers de la couche de passivation présente à la surface des électrodes, en utilisant par exemple, des additifs permettant d'améliorer ce transport, comme des pyrocarbonates (tels que décrit dans Smart et al., Jet Propulsion Lab. Paper (2000)).

Pour contourner les inconvénients liés au graphite, une autre solution peut consister à remplacer celui-ci par d'autres matériaux d'électrode et, notamment, par du silicium.

C'est ainsi qu'il a été mis en évidence que l'insertion du silicium dans une électrode négative permettait d'augmenter significativement la capacité spécifique pratique de l'électrode négative liée à l'insertion du lithium dans celle-ci, laquelle est de 320 mAh/g pour une électrode en graphite et de l'ordre de 3580 mAh/g pour une électrode à base de silicium (correspondant à la formation de l'alliage Li₁₅Si₄ lors de l'insertion à température ambiante du lithium dans le silicium). Ainsi, par le biais de prévisions simples, il est possible d'envisager un gain d'environ 40 et 35%, respectivement en énergie volumique et en énergie massique, si l'on substitue le graphite par du silicium dans un accumulateur classique de la filière « lithium-ion ». Par ailleurs, la fenêtre de potentiel de fonctionnement de l'alliage lithium-silicium de formule Li₁₅Si₄ (0,4-0,05 V/Li-Li⁺) plus élevée que celle du graphite, permet d'éviter la formation d'un dépôt de lithium métallique et les risques associés, tout en laissant la possibilité de procéder à des charges plus rapides. De plus, il est établi que la réaction de formation de l'alliage lithium-silicium, conduisant à une capacité spécifique pratique très élevée (de l'ordre de 3578 mAh/g), est réversible.

Le document US 2012/313570 décrit des batteries au lithium à électrolyte non aqueux, lequel électrolyte permet à la batterie de conserver ses propriétés de charge, lorsqu'elle est en situation de surcharge (paragraphe [0010]).

L'électrolyte non aqueux comprend un solvant non aqueux, un sel électrolytique, un agent de contrôle de surcharge capable de générer une réaction redox à un potentiel donné et au moins un composé choisi par les catégories (1) à (10) définies aux paragraphes [0011]-[0020].

Plus spécifiquement, il est fait mention de batteries comprenant une électrode négative à base de silicium et une électrode positive à base de LiCoO₂ et un électrolyte comprenant un mélange de solvants carbonates (le mélange EC/DMC/EMC 25/40/30), un sel de lithium LiPF₆, de l'acétonitrile et du carbonate de fluoroéthylène.

Le document US 2011/250509 décrit des batteries au lithium comprenant, outre une anode et une cathode, un électrolyte comprenant un composé piégeur de radicaux, ce qui permet d'améliorer la stabilité chimique de la cathode, de l'anode et de l'électrolyte.

Plus spécifiquement, il est fait état, en particulier, d'une batterie comportant, outre une anode en silicium, un électrolyte comportant un solvant carbonate diéthylique, un composé carbonate de fluoroéthylène, de l'acétonitrile et un sel de lithium LiPF₆).

Le document US 2009/214938 décrit des batteries secondaires à électrolyte non aqueux comprenant une électrode positive, une électrode négative, un séparateur interposé entre ladite électrode positive et ladite électrode négative et un électrolyte non aqueux amélioré en vue d'augmenter les performances de cyclage et les performances de stockage à l'état chargé (paragraphe [0002]).

L'électrolyte non aqueux comporte plus spécifiquement un solvant non aqueux comprenant un ou plusieurs carbonates cycliques fluorés et un ester carboxylique et comporte un composé nitrile avant un groupe hydrocarboné saturé à au moins deux atomes de carbone.

Différents exemples concrets de réalisation illustrent ce document, parmi desquels une batterie comprenant une électrode positive à base de LiCoO₂, une électrode négative à base de silicium et un électrolyte non aqueux comprenant un mélange de solvants carbonates (du 4-fluro-1,3-dioxolane-2-one (FEC) et du 4,5-difluoro-1,3-dioxolane-2-one (DFEC)), du propionate de méthyle, du valéronitrile et LiPF₆ (Exemple 5).

En choisissant de mettre au point une cellule de batterie lithium-ion avec une électrode négative comprenant du silicium, les auteurs de la présente invention se sont fixé pour but de proposer un électrolyte liquide compatible pour ce type de cellule, qui présente de bonnes propriétés à basses températures (par exemple, une température allant de 0 à -40°C, par exemple -20°C) et notamment une bonne cyclabilité.

### EXPOSÉ DE L'INVENTION

Ainsi, l'invention a trait à une cellule électrochimique pour batterie lithium-ion comprenant :
- une électrode négative comprenant, comme matériau actif, du silicium ;
- une électrode positive ; et
- un électrolyte disposé entre ladite électrode négative et ladite électrode positive, ledit électrolyte comprenant au moins un sel de lithium, au moins un solvant carbonate, au moins un composé mononitrile qui est un composé monotrile comportant, en dehors du groupe -CN, au moins deux atomes de carbone et au moins un composé répondant à l'une des formules (I) et (II) suivantes : 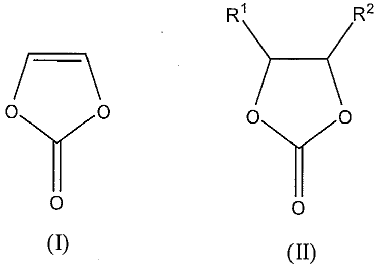
dans laquelle R¹ et R² représentent, indépendamment l'un de l'autre, H, Cl ou F, à la condition que R¹ et R² ne représentent pas tous les deux H,
ledit composé de formule (I) et (II) étant présent en une teneur allant de 0,5 à 10% massique par rapport à la masse totale des autres ingrédients formant l'électrolyte,
caractérisé en ce que ledit, au moins un, solvant carbonate est un mélange comprenant du carbonate de propylène et au moins un carbonate linéaire choisi parmi le carbonate diéthylique, le carbonate éthylique méthylique, présent en une teneur allant de 25% à 75% du volume total de l'électrolyte avant l'ajout dudit au moins un composé de formule (I) ou (II) telles que définies ci-dessus.

Le composé (II) peut être utilisé indifféremment sous ses différentes formes isomères.

Le choix motivé des ingrédients de l'électrolyte susmentionné résultant en un mélange de solvant(s) carbonate(s), de composé(s) mononitrile(s), de composé(s) de formule (I) et/ou (II) et d'au moins un sel de lithium contribue à améliorer les propriétés à basses températures d'une cellule de batterie lithium-ion, dont l'électrode négative comporte, comme matériau actif, du silicium.

Avant d'entrer plus en détail dans l'exposé de cette invention, nous précisons les définitions suivantes.

Par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

Par électrode positive, on entend, classiquement, dans ce qui précède et ce qui suit, l'électrode qui fait office de cathode, quand le générateur débite du courant (c'est-à-dire lorsqu'il est en processus de décharge) et qui fait office d'anode lorsque le générateur est en processus de charge.

Par composé mononitrile, on entend un composé organique comportant un seul groupe nitrile de formule -CN.

L'électrode positive peut être une électrode comprenant, comme matériau actif, un matériau d'insertion du lithium du type oxyde lithié ou du type phosphate lithié comprenant au moins un élément métallique de transition.

Comme exemples de composés oxydes lithiés comprenant au moins un élément métallique de transition, on peut citer des oxydes simples ou des oxydes mixtes (c'est-à-dire des oxydes comprenant plusieurs éléments métalliques de transition distincts) comprenant au moins un élément métallique de transition, tels que des oxydes comprenant du nickel, du cobalt, du manganèse et/ou de l'aluminium (ces oxydes pouvant être des oxydes mixtes).

Plus spécifiquement, comme oxydes mixtes comprenant du nickel, du cobalt, du manganèse et/ou de l'aluminium, on peut citer les composés de formule (III) suivante :

LiM²O₂ (III)

dans laquelle M² est un élément choisi parmi Ni, Co, Mn, Al et les mélanges de ceux-ci.

A titre d'exemples de tels oxydes, on peut citer les oxydes lithiés LiCoO₂, LiNiO₂ et les oxydes mixtes Li(Ni,Co,Mn)O₂ (tel que Li(Ni_{1/3}Mn_{1/3}CO_{1/3})O₂) connu également sous la dénomination NMC), Li(Ni,Co,Al)O₂ (tel que Li(Ni_{0,8}Co_{0,15}Al_{0,05})O₂ connu également sous la dénomination NCA) ou Li(Ni,Co,Mn,Al)O₂.

Comme exemples de composés phosphates lithiés comprenant au moins un élément métallique de transition, on peut citer les composés de formule LiM¹PO₄, où M¹ est choisi parmi Fe, Mn, Co et les mélanges de ceux-ci, tel que LiFePO₄.

Outre la présence d'un matériau actif, tel que ceux définis ci-dessus, l'électrode positive peut comprendre un liant polymérique, tel que du polyfluorure de vinylidène (PVDF), un mélange carboxyméthylcellulose avec un latex du type styrène et/ou butadiène ainsi que un ou plusieurs adjuvants conducteurs de l'électricité, qui peuvent être des matériaux carbonés comme du noir de carbone.

Ainsi, d'un point de vue structural, l'électrode positive peut se présenter sous forme d'un matériau composite comprenant une matrice en liant(s) polymérique(s), au sein de laquelle sont dispersées des charges constituées par le matériau actif et éventuellement le ou adjuvants conducteurs de l'électricité.

L'électrode négative, comme mentionné ci-dessus, est une électrode comprenant, comme matériau actif, du silicium (c'est-à-dire du silicium sous forme élémentaire, soit en d'autres termes, du silicium à l'état d'oxydation 0, c'est-à-dire encore non combiné à d'autres éléments).

En outre, au même titre que pour l'électrode positive, il peut comprendre un liant polymérique, tel que du polyfluorure de vinylidène (PVDF), un mélange carboxyméthylcellulose avec un latex du type styrène et/ou butadiène ainsi que un ou plusieurs adjuvants conducteurs de l'électricité, qui peuvent être des matériaux carbonés, comme du noir de carbone. Qui plus est, au même titre que pour l'électrode positive, l'électrode négative peut se présenter, d'un point de vue structural, comme un matériau composite comprenant une matrice en liant(s) polymérique(s) au sein de laquelle sont dispersées des charges constituées par le silicium (se présentant, par exemple, sous forme particulaire) et éventuellement le ou les adjuvants conducteurs de l'électricité.

L'électrolyte susmentionné est un électrolyte liquide non aqueux conducteur d'ions lithium disposé entre l'électrode négative et l'électrode positive. Cet électrolyte peut être amené à imprégner un séparateur poreux, lequel est disposé entre l'électrode positive et l'électrode négative de la cellule électrochimique.

Ce séparateur peut être en un matériau poreux, tel qu'un matériau polymérique, apte à accueillir dans sa porosité l'électrolyte liquide.

L'électrolyte de l'invention est basé sur la coexistence, au sein d'un milieu liquide, d'au moins quatre ingrédients : au moins un solvant carbonate tel que défini ci-dessus, au moins un sel de lithium, au moins un composé mononitrile et au moins un composé de formule (I) ou (II). Il est entendu que le au moins un composé de formule (I) ou (II) est d'une nature différente de celle du ou des solvants carbonates susmentionnés et *vice versa*, c'est-à-dire que le ou les solvants carbonates susmentionnés sont différents des composés de formule (I) ou (II).

L'électrolyte de l'invention comprend au moins un solvant carbonate qui est un mélange de solvants carbonates, et plus spécifiquement un mélange eutectique de solvants carbonates et encore plus spécifiquement un mélange binaire eutectique. Ce mélange de solvants carbonates est un mélange comprenant du carbonate de propylène et au moins un carbonate linéaire choisi parmi le carbonate diéthylique, le carbonate éthylique méthylique. De manière plus spécifique, un mélange de solvants carbonates particulièrement approprié est un mélange binaire eutectique comprenant du carbonate de propylène et du carbonate éthylique méthylique, le carbonate de propylène et le carbonate éthylique méthylique étant présents dans le mélange en des teneurs respectives de 60% volumique et 40% volumique (ce mélange pour être symbolisé par l'abréviation 0,6PC-0,4EMC) par rapport au volume total du mélange de solvants carbonates.

Le, au moins un, solvant carbonate est présent dans l'électrolyte, en un teneur allant de 25 à 75 % du volume total de l'électrolyte avant rajout d'au moins un composé de formule (I) ou (II) telles que définies ci-dessus, par exemple, une teneur de 25% du volume total de l'électrolyte.

Le sel de lithium peut être choisi dans le groupe constitué par LiPF₆, LiClO₄, LiBF₄, LiAsF₆, LiCF₃SO₃, LiN(CF₃SO₂)₃, LiN(C₂F₅SO₂), le bistrifluorométhylsulfonylimide de lithium (connu sous l'abréviation LITFSI) LiN[SO₂CF₃]₂ et les mélanges de ceux-ci, la préférence portant sur le sel LiPF₆.

Le sel de lithium peut être présent, dans l'électrolyte, selon une concentration allant de 0,3 M à 2 M, par exemple, 1M.

Concernant le composé mononitrile, il est un composé mononitrile comportant, en dehors du groupe -CN, au moins deux atomes de carbone, des composés de ce type pouvant être le propionitrile (comportant 2 atomes de carbone en dehors du groupe -CN), le butyronitrile (comportant 3 atomes de carbone en dehors du groupe -CN) ou le valéronitrile (comportant 4 atomes de carbone en dehors du groupe -CN), la préférence allant vers le butyronitrile, lequel présente des propriétés idéales en termes de point de fusion (-112°C), de viscosité (0,55 cP, ce qui est une valeur faible) et de constante diélectrique (25) qui permet ainsi de dissocier facilement les sels de lithium.

Le composé mononitrile, tel que le butyronitrile, peut être présent, dans la composition, en une teneur pouvant aller jusqu'à 75% en volume par rapport au volume total de l'électrolyte, de préférence, une teneur allant de 50 à 75% en volume par rapport au volume total de l'électrolyte. De préférence, le volume total de l'électrolyte est considéré avant l'ajout d'au moins un composé de formule (I) ou (II) telles que définies ci-dessus. Cette teneur aussi importante est rendue possible par la présence dans l'électrolyte des composés de formule (I) ou (II), dont la présence en combinaison avec les autres ingrédients donnent d'excellents résultats en termes de cyclabilité et de durabilité pour un électrolyte pouvant présenter une viscosité très faible du fait de la proportion de composé mononitrile pouvant être très élevée.

Enfin, le composé de formule (I) ou (II) est présent dans l'électrolyte en une teneur allant de 0,5 à 10 % massique par rapport à la masse totale des autres ingrédients formant l'électrolyte. Plus spécifiquement, il peut être présent selon une teneur allant de 1 à 5% massique, de préférence encore de 2% massique par rapport à la masse totale des autres ingrédients formant l'électrolyte.

Concernant le composé de formule (II), un composé spécifique entrant dans cette définition et particulièrement approprié est le composé de formule (IIa) suivante : 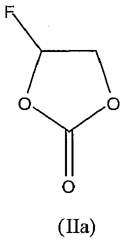 ce composé étant appelé également carbonate de fluoroéthylène.

Des électrolytes spécifiques susceptibles d'entrer dans la constitution des cellules électrochimiques de l'invention peuvent être des électrolytes comprenant :
- comme solvants carbonates, un mélange comprenant du carbonate de propylène et du carbonate éthylique méthylique, le carbonate de propylène et le carbonate éthylique méthylique étant présents dans le mélange en des teneurs respectives de 60% volumique et 40% volumique par rapport au volume total du mélange de solvants carbonates (ce mélange pour être symbolisé par l'abréviation 0,6PC-0,4EMC) ;
- comme composé mononitrile, du butyronitrile ;
- comme sel de lithium, du LiPF₆; et
- le composé de formule (I) ou le composé de formule (IIa) tels que définis ci-dessus,
les solvants carbonates et le butyronitrile pouvant être présents en des teneurs respectives de 25% et de 75% du volume total du mélange formé par les solvants carbonates et le butyronitrile ou vice versa (à savoir des teneurs respectives de 75% et de 25%) et le composé de formule (I) ou de formule (IIa) étant présent en une teneur de 2% massique par rapport à la masse totale des autres ingrédients formant l'électrolyte.

D'autres caractéristiques et avantages de l'invention apparaîtront du complément de description qui suit et qui se rapporte à des modes de réalisation particuliers.

Bien entendu, ce complément de description n'est donné qu'à titre d'illustration de l'invention et n'en constitue en aucun cas une limitation.

### BRÈVE DESCRIPTION DES DESSINS

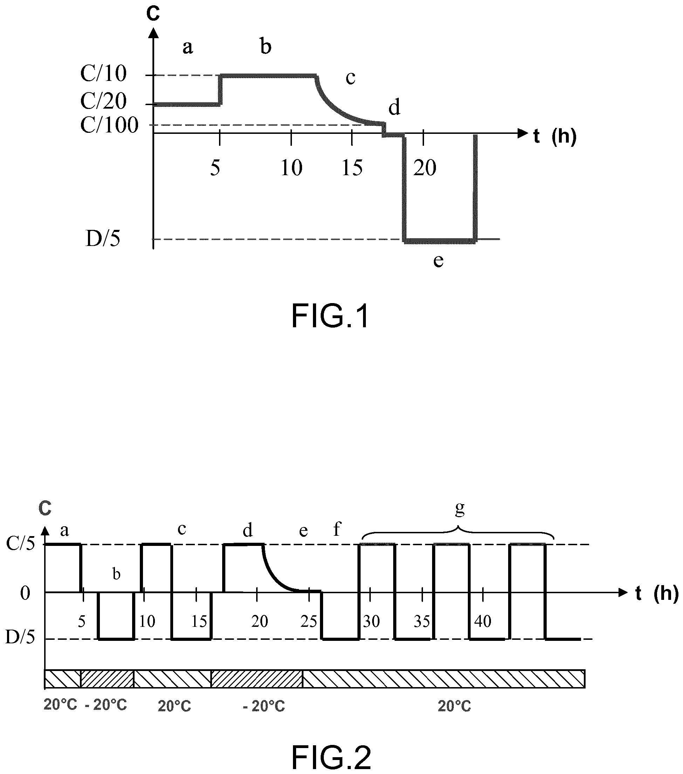

Les figures 1 et 2 correspondent aux graphiques illustrant les tests mis en oeuvre pour les exemples exposés ci-dessous.

### EXPOSÉ DÉTAILLÉ DE MODES DE RÉALISATION PARTICULIERS

Les présents exemples illustrent des cellules électrochimiques conformes à l'invention et des cellules comparatives, se présentant sous forme d'une pile bouton comprenant :
- comme électrode négative, une électrode négative comprenant du silicium ; et
- comme électrode positive, une électrode comprenant un oxyde mixte de nickel, manganèse et cobalt LiNi_{0,33}Mn_{0,33}Co_{0,33}O₂ ; et
- un électrolyte disposé entre ladite électrode positive et l'électrode négative, dont la composition sera explicitée ci-dessous.

L'électrode négative est obtenue par enduction, sur une feuille de cuivre, d'une encre composée de 82% massique de silicium, 12% massique d'un conducteur électronique (noir de carbone et fibres de carbone) et 6% massique d'un liant cellulosique. Cette électrode (4 mAh/cm²) est calandrée puis découpée sous forme d'un disque de diamètre 16 mm.

L'électrode positive est obtenue par enduction, sur une feuille d'aluminium, d'une encre composée de 92% massique de LiNi_{0,33}Mn_{0,33}Co_{0,33}O₂, 4% massique d'un conducteur électronique (noir de carbone et fibres de carbone) et 4% massique d'un liant polymérique PVDF. Cette électrode (4 mAh/cm²) est calandrée puis découpée sous forme d'un disque de diamètre 14 mm.

Les piles boutons sont fabriquées à partir de ces électrodes en empilant un disque d'électrode négative, un séparateur imbibé d'électrolyte et un disque d'électrode positive.

Les piles boutons susmentionnées ont fait l'objet d'études pour tester les réponses en charge et en décharge de celles-ci à -20°C, les tests élaborés étant :
- un test de formation à température ambiante permettant de former, de manière adéquate, les différentes interphases électrode/électrolyte, cette étape se déroulant à régime lent afin de promouvoir l'homogénéité des interphases;
- un test de cyclages à température variable.

Le protocole du test de formation à température ambiante (20°C) est tel qu'illustré à la figure 1 (représentant l'évolution de la capacité C en fonction du temps t (exprimé en heures)) et comporte les étapes suivantes :
- une étape de charge à courant constant C/20 pendant 5 heures (partie a de la courbe sur la figure 1) ;
- une étape de charge à courant constant C/10 jusqu'à 4,2 V (partie b de la courbe sur la figure 1) ;
- une étape de charge d'entretien à tension constante (4,2 V) jusqu'à C/100 (partie c de la courbe sur la figure 1) ;
- une étape de repos à courant nul pendant 5 minutes (partie d de la courbe de la figure 1) ;
- une étape de décharge à courant constant D/5 jusqu'à 2,5 V (partie e de la courbe de la figure 1).

De ce test, l'on détermine la capacité irréversible de formation, qui correspond à la proportion de différence de capacité entre la décharge et la charge de formation. Cette valeur est liée à la dégradation initiale de l'électrolyte sur les électrodes, qui permet généralement de former les interphases. Une valeur faible est recherchée pour minimiser la perte de capacité liée à cette formation.

Le protocole du test de cyclages à température variable est tel qu'illustré à la figure 2 (représentant l'évolution de la capacité C en fonction du temps t (exprimé en heures)) et comporte les étapes suivantes :
- une étape de charge à C/5 jusqu'à 4,2 V à une température de 20°C (partie a de la courbe de la figure 2) ;
- une étape de décharge à D/5 jusqu'à 2,5 V après mise à température à - 20°C pendant 1 heure (partie b de la courbe de la figure 2) ;
- une étape de cyclage à C/5 après mise à température à 20°C pendant 1 heure (partie c de la courbe de la figure 2) ;
- une étape de charge à C/5 jusqu'à 4,2 V pendant 10 heures (partie d de la courbe de la figure 2) suivie d'une étape de charge d'entretien à 4,2 V à -20°C (partie e de la courbe de la figure 2) suivie d'une étape de décharge à D/5 jusqu'à 2,5 V après mise à température à 20°C pendant 1 heure (partie f de la courbe de la figure 2) ;
- des étapes successives de cyclage à C/5 à 20°C (partie g de la courbe de la figure 2).

De ce test, l'on a déterminé les grandeurs suivantes :
- les résistances instantanées à 20°C et à -20°C ainsi que les résistances mesurées à 5 secondes (mentionnées respectivement dans les tableaux ci-dessous *R_{pulse 20°C}, R_{pulse -20°C} et R_{5s-20°C}*) durant les étapes a) et b) de la figure 2 ;
- la proportion de capacité déchargée à -20°C (étape b)) après une charge à 20°C (mentionnée dans les tableaux ci-dessous par *Décharge -20°C*) ;
- la capacité chargée à -20°C à régime C/5 (mentionnée dans les tableaux ci-dessous par *Charge -20°C C*/*5*) (étape d)) ;
- la capacité chargée à -20°C à régime C/5 puis en complétant jusqu'à 10 heures en charge à potentiel constant (étapes d) et e)) (mentionnée dans les tableaux ci-dessous par *Charge -20°C C*/*5* + *CV*) ;
- la capacité obtenue à la fin du 5^{ème} cyclage (cyclage de l'étape g)) (c'est-à-dire à l'issue de la 5^{ème} décharge) par rapport à la décharge de formation (mentionnée dans les tableaux ci-dessous *Test de réversibilité*).

### EXEMPLE COMPARATIF 1

Dans cet exemple comparatif, il est utilisé, avec la pile bouton susmentionnée, un électrolyte non conforme à l'invention, correspondant à un mélange quaternaire comprenant un mélange de 4 solvants carbonates EC/DMC/DEC/EMC (1/1/1/3 en volume), EC signifiant carbonate d'éthylène, DMC signifiant carbonate diméthylique, DEC signifiant carbonate de diéthylène, EMC signifiant carbonate éthylique méthylique et comprenant, en sus de ces solvants carbonates, 1% massique de carbonate de vinylène de formule (I) définie ci-dessus et comprenant, comme sel de lithium, du LiPF₆ 1M.

Les résultats obtenus avec cet électrolyte sont illustrés par le tableau suivant.

| | Résultats |
|---|---|
| *Capacité irréversible de formation* | 15% |
| *R_{pulse 20°C}* | 10 Ω |
| *R_{pulse -20°C}* | 42 Ω |
| *R_{5s 20°C}* | 108 Ω |
| *Décharge -20°C* | 76% |
| *Charge -20°C C*/*5* | 68% |
| *Charge -20°C C*/*5 + CV* | 97% |
| *Réversibilité de la charge à -20°C* | 93% |
| *Test de réversibilité* | 86% |

### EXEMPLE 1

Dans cet exemple, il est utilisé, avec la pile bouton susmentionnée, un électrolyte conforme à l'invention, correspondant à un mélange ternaire comprenant deux solvants carbonates PC et EMC dans des proportions respectives de 60% volumique et 40% volumique par rapport au volume total desdits deux solvants, PC signifiant carbonate de propylène, EMC signifiant carbonate éthylique méthylique et comprenant, en sus de ces solvants carbonates, du butyronitrile correspondant à 25% volumique dudit mélange (ce qui signifie, en d'autres termes, que les deux solvants carbonates forment 75% volumique du mélange), auquel mélange est ajouté 2% massique de carbonate de vinylène de formule (I) définie ci-dessus et comprenant, comme sel de lithium, du LiPF₆ 1M.

Les résultats obtenus avec cet électrolyte sont illustrés par le tableau suivant.

| | Résultats |
|---|---|
| *Irréversible de formation* | 14% |
| *R_{pulse 20°C}* | 9 Ω |
| *R_{pulse -20°C}* | 19 Ω |
| *R_{5s 20°C}* | 91 Ω |
| *Décharge -20°C* | 76% |
| *Charge -20°C C*/*5* | 80% |
| *Charge -20°C C*/*5* + *CV* | 100% |
| *Réversibilité de la charge à -20°C* | 97% |
| *Test de réversibilité* | 95% |

On constate, au vu de ses résultats, une amélioration des propriétés des piles, notamment concernant :
- les propriétés de résistance, les résistances instantanées à 20°C et -20°C et à 5s à 20°C étant moindres dans cet exemple que dans l'exemple comparatif 1;
- les propriétés de charges ;
- les propriétés de réversibilité, attestant d'une amélioration au niveau des propriétés de cyclage et des propriétés de durabilité au cours du test mis en oeuvre et illustré par la figure 2.

En résumé, cet exemple démontre de bonnes propriétés à basses températures pour la pile mise en oeuvre un électrolyte conforme à l'invention.

### EXEMPLE 2

Dans cet exemple, il est utilisé, avec la pile bouton susmentionnée, un électrolyte conforme à l'invention, correspondant à un mélange ternaire comprenant deux solvants carbonates PC et EMC dans des proportions respectives de 60% volumique et 40% volumique par rapport au volume total desdits deux solvants, PC signifiant carbonate de propylène, EMC signifiant carbonate éthylique méthylique et comprenant, en sus de ces solvants carbonates, du butyronitrile correspondant à 75% volumique dudit mélange (ce qui signifie, en d'autres termes, que les deux solvants carbonates forment 25% volumique du mélange), auquel mélange est ajouté 2% massique de carbonate de vinylène de formule (I) définie ci-dessus et comprenant, comme sel de lithium, du LiPF₆ 1M.

Les résultats obtenus avec cet électrolyte sont illustrés par le tableau suivant.

| | Résultats |
|---|---|
| *Irréversible de formation* | 14% |
| *R_{pulse 20°C}* | 8 Ω |
| *R_{pulse -20°C}* | 18 Ω |
| *R_{5s 20°C}* | 67 Ω |
| *Décharge -20°C* | 76% |
| *Charge -20°C C*/*5* | 84% |
| *Charge -20°C C*/*5* + *CV* | 98% |
| *Réversibilité de la charge à -20°C* | 96% |
| *Test de réversibilité* | 90% |

On constate, au vu de ses résultats, une amélioration des propriétés des piles, notamment concernant :
- les propriétés de résistance, les résistances instantanées à 20°C et -20°C et à 5s à 20°C étant moindres dans cet exemple que dans l'exemple comparatif 1 ;
- les propriétés de charges ;
- les propriétés de réversibilité, attestant d'une amélioration au niveau des propriétés de cyclage et des propriétés de durabilité au cours du test mis en oeuvre et illustré par la figure 2.

Qui plus est, ce test démontre la possibilité de travailler avec d'importantes quantités de butyronitrile et de tirer ainsi avantage des propriétés intrinsèques du butyronitrile, notamment en termes de viscosité et de constante diélectrique élevée.

En résumé, cet exemple démontre de bonnes propriétés à basses températures pour la pile mise en oeuvre un électrolyte conforme à l'invention.

### EXEMPLE 3

Dans cet exemple, il est utilisé, avec la pile bouton susmentionnée, un électrolyte conforme à l'invention, correspondant à un mélange ternaire comprenant deux solvants carbonates PC et EMC dans des proportions respectives de 60% volumique et 40% volumique par rapport au volume total desdits deux solvants, PC signifiant carbonate de propylène, EMC signifiant carbonate éthylique méthylique et comprenant, en sus de ces solvants carbonates, du butyronitrile correspondant à 25% volumique dudit mélange (ce qui signifie, en d'autres termes, que les deux solvants carbonates forment 75% volumique), auquel mélange est ajouté 2% massique de carbonate de fluoroéthylène de formule (IIa) définie ci-dessus et comprenant, comme sel de lithium, du LiPF₆ 1M.

Les résultats obtenus avec cet électrolyte sont illustrés par le tableau suivant.

| | Résultats |
|---|---|
| *Irréversible de formation* | 15% |
| *R_{pulse 20°C}* | 8 Ω |
| *R_{pulse -20°C}* | 20 Ω |
| *R_{5s 20°C}* | 75 Ω |
| *Décharge -20°C* | 75% |
| *Charge -20°C C*/*5* | 86% |
| *Charge -20°C C*/*5* + *CV* | 100% |
| *Réversibilité de la charge à -20°C* | 98% |
| *Test de réversibilité* | 97% |

On constate, au vu de ses résultats, une amélioration des propriétés des piles, notamment concernant :
- les propriétés de résistance, les résistances instantanées à 20°C et -20°C et à 5s à 20°C étant moindres dans cet exemple que dans l'exemple comparatif 1 ;
- les propriétés de charges ;
- les propriétés de réversibilité, attestant d'une amélioration au niveau des propriétés de cyclage et des propriétés de durabilité au cours du test mis en oeuvre et illustré par la figure 2.

En résumé, cet exemple démontre de bonnes propriétés à basses températures pour la pile mise en oeuvre un électrolyte conforme à l'invention.

## Revendications

1. Cellule électrochimique pour batterie lithium-ion comprenant :
- une électrode négative comprenant, comme matériau actif, du silicium ;
- une électrode positive ; et
- un électrolyte disposé entre ladite électrode négative et ladite électrode positive, ledit électrolyte comprenant un sel de lithium, au moins un solvant carbonate, au moins un composé mononitrile, et au moins un composé répondant à au moins l'une des formules (I) et (II) suivantes : 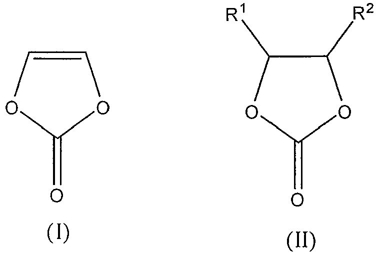 dans laquelle R¹ et R² représentent, indépendamment l'un de l'autre, H, Cl ou F, à la condition que R¹ et R² ne représentent pas tous les deux H,
ledit composé de formule (I) ou (II) étant présent en une teneur allant de 0,5 à 10% massique par rapport à la masse totale des autres ingrédients formant l'électrolyte,
**caractérisé en ce que**
le dit, au moins un, composé mononitrile est un composé mononitrile comportant, en dehors du groupe -CN, au moins deux atomes de carbone, et
ledit, au moins un, solvant carbonate est un mélange comprenant du carbonate de propylène et au moins un carbonate linéaire choisi parmi le carbonate diéthylique, le carbonate éthylique méthylique, présent en une teneur allant de 25% à 75% du volume total de l'électrolyte avant l'ajout dudit au moins un composé de formule (I) ou (II) telles que définies ci-dessus.

2. Cellule électrochimique selon la revendication 1, dans laquelle l'électrode positive est une électrode comprenant, comme matériau actif, un matériau d'insertion du lithium du type oxyde lithié comprenant un élément métallique de transition.

3. Cellule électrochimique selon la revendication 1 ou 2, dans laquelle l'électrode positive comprend, comme matériau actif, un matériau d'insertion du lithium du type oxyde comprenant du nickel, du cobalt, du manganèse et/ou de l'aluminium.

4. Cellule électrochimique selon la revendication 3, dans laquelle l'oxyde comprenant du nickel, du cobalt, du manganèse et/ou de l'aluminium répond à la formule (III) suivante :
LiM²O₂ (III)
dans laquelle M² est un élément choisi parmi Ni, Co, Mn, Al et les mélanges de ceux-ci.

5. Cellule électrochimique selon la revendication 3 ou 4, dans laquelle l'oxyde comprenant du nickel, du cobalt, du manganèse et/ou de l'aluminium est choisi parmi LiCoO₂, LiNiO₂ Li(Ni,Co,Mn)O₂, Li(Ni,Co,Al)O₂, Li(Ni,Co,Mn,Al)O₂.

6. Cellule électrochimique selon l'une quelconque des revendications précédentes, dans laquelle le, au moins, un solvant carbonate est un mélange binaire eutectique comprenant du carbonate de propylène et du carbonate éthylique méthylique, le carbonate de propylène et le carbonate éthylique méthylique étant présents dans le mélange en des teneurs respectives de 60% volumique et 40% volumique par rapport au volume total du mélange de solvants carbonates.

7. Cellule électrochimique selon l'une quelconque des revendications précédentes, dans laquelle le sel de lithium est choisi dans le groupe constitué par LiPF₆, LiClO₄, LiBF₄, LiAsF₆, LiCF₃SO₃, LiN(CF₃SO₂)₃, LiN(C₂F₅SO₂), le bistrifluorométhylsulfonylimide de lithium LiN[SO₂CF₃]₂ et les mélanges de ceux-ci.

8. Cellule électrochimique selon l'une quelconque des revendications précédentes, dans laquelle le sel de lithium est LiPF₆.

9. Cellule électrochimique selon quelconque des revendications précédentes, dans laquelle le composé mononitrile est du butyronitrile.

10. Cellule électrochimique selon l'une quelconque des revendications précédentes, dans laquelle le composé mononitrile est présent, dans la composition, en une teneur pouvant aller jusqu'à 75% en volume par rapport au volume total de l'électrolyte.

11. Cellule électrochimique selon l'une quelconque des revendications précédentes, dans laquelle un composé spécifique entrant dans la définition des composés de formule (II) est le composé de formule (IIa) suivante :

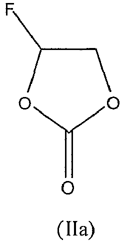

12. Cellule électrochimique selon l'une quelconque des revendications précédentes, dans laquelle l'électrolyte comprend :
- comme solvants carbonates, un mélange comprenant du carbonate de propylène et du carbonate éthylique méthylique, le carbonate de propylène et le carbonate éthylique méthylique étant présents dans le mélange en des teneurs respectives de 60% volumique et 40% volumique par rapport au volume total du mélange ;
- comme composé mononitrile, du butyronitrile ;
- comme sel de lithium, du LiPF₆; et
- le composé de formule (I) ou le composé de formule (IIa) tels que définis aux revendications 1 et 11,
les solvants carbonates et le butyronitrile étant présents en des teneurs respectives de 25% et de 75% du volume total du mélange formé par les solvants carbonates et le butyronitrile ou vice versa (à savoir des teneurs respectives de 75% et de 25%) et le composé de formule (I) ou de formule (IIa) étant présent en une teneur de 2% massique par rapport à la masse totale des autres ingrédients formant l'électrolyte.

## Patentansprüche

1. Elektrochemische Zelle für eine Lithium-Ionen-Batterie, enthaltend:
- eine negative Elektrode, die als Wirkmaterial Silicium enthält;
- eine positive Elektrode; und
- einen Elektrolyten, der zwischen der negativen Elektrode und der positiven Elektrode angeordnet ist, wobei der Elektrolyt ein Lithiumsalz, zumindest ein Karbonat-Lösungsmittel, zumindest eine Mononitril-Verbindung und zumindest eine Verbindung enthält, die zumindest einer der nachfolgenden Formeln (I) und (II) entspricht: 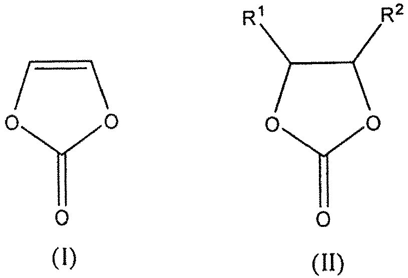 worin R¹ und R² unabhängig voneinander H, Cl oder F darstellen, vorausgesetzt, dass R¹ und R² nicht beide H darstellen,
wobei die Verbindung der Formel (I) oder (II) mit einem Gehalt von 0,5 bis 10<Masse-% bezüglich der Gesamtmasse der weiteren den Elektrolyten bildenden Inhaltsstoffen vorliegt,
**dadurch gekennzeichnet, dass**
die zumindest eine Mononitril-Verbindung eine Mononitril-Verbindung ist, die außer der Gruppe -CN zumindest zwei Kohlenstoffatome enthält, und
das zumindest eine Karbonat-Lösungsmittel ein Gemisch ist, das Propylencarbonat und zumindest ein lineares Carbonat enthält, ausgewählt aus Diethylcarbonat, Ethylmethylcarbonat, das mit einem Gehalt von 25 % bis 75 Vol.-% des Gesamtvolums des Elektrolyten vor dem Beimengen der zumindest einen Verbindung der Formel (I) oder (II), wie sie oben definiert sind, vorhanden ist.

2. Elektrochemische Zelle nach Anspruch 1, wobei die positive Elektrode eine Elektrode ist, die als Wirkmaterial ein Lithiuminsertionsmaterial vom Typ lithiumhaltiges Oxid enthält, das ein metallisches Übergangselement enthält.

3. Elektrochemische Zelle nach Anspruch 1 oder 2, wobei die positive Elektrode als Wirkmaterial ein Lithiuminsertionsmaterial vom Typ nickel-, kobalt-, mangan- und/oder aluminiumhaltiges Oxid enthält.

4. Elektrochemische Zelle nach Anspruch 3, wobei das nickel-, kobalt-, mangan- und/oder aluminiumhaltige Oxid der nachfolgenden Formel (III) entspricht:
LiM²O₂ (III)
worin M² ein Element, ausgewählt aus Ni, Co, Mn, Al und deren Gemischen, ist.
enthält.

5. Elektrochemische Zelle nach Anspruch 3 oder 4, wobei das nickel-, kobalt-, mangan- und/oder aluminiumhaltige Oxid ausgewählt ist aus LiCoO₂, LiNiO₂, Li(Ni, Co, Mn)O₂, Li(Ni, Co, Al)O₂, Li(Ni, Co, Mn, Al)O₂.

6. Elektrochemische Zelle nach einem der vorangehenden Ansprüche, wobei das zumindest eine Carbonat-Lösungsmittel ein binäres, eutektisches Gemisch ist, das Propylencarbonat und Ethylmethylcarbonat enthält, wobei das Propylencarbonat und das Ethylmethylcarbonat in dem Gemisch mit einem jeweiligen Gehalt von 60 Vol.-% bzw. 40 Vol.-% bezüglich des Gesamtvolumens des Gemischs von Carbonat-Lösungsmitteln vorliegen.

7. Elektrochemische Zelle nach einem der vorangehenden Ansprüche, wobei das Lithiumsalz ausgewählt ist aus der Gruppe umfassend LiPF₆, LiClO₄, LiBF₄, LiAsF₆, LiCF₃SO₃, LiN(CF₃SO₂)₃, LiN(C₂F₅SO₂), Lithium-bistrifluormethylsulfonylimid LiN[SO₂CF₃]₂, und deren Gemische.

8. Elektrochemische Zelle nach einem der vorangehenden Ansprüche, wobei das Lithiumsalz LiPF₆ ist.

9. Elektrochemische Zelle nach einem der vorangehenden Ansprüche, wobei die Mononitril-Verbindung Butyronitril ist.

10. Elektrochemische Zelle nach einem der vorangehenden Ansprüche, wobei die Mononitril-Verbindung in der Zusammensetzung mit einem Gehalt vorliegt, der bis zu 75 Vol.-% bezüglich des Gesamtvolumens des Elektrolyten reichen kann.

11. Elektrochemische Zelle nach einem der vorangehenden Ansprüche, wobei eine spezifische Verbindung, die in die Definition der Verbindungen der Formel (II) eingeht, die Verbindung der nachfolgenden Formel (IIa) ist:

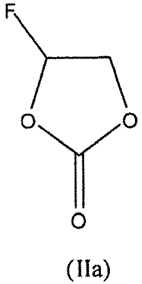

12. Elektrochemische Zelle nach einem der vorangehenden Ansprüche, wobei der Elektrolyt enthält:
- als Carbonat-Lösungsmittel ein Gemisch, das Propylencarbonat und Ethylmethylcarbonat enthält, wobei das Propylencarbonat und Ethylmethylcarbonat in dem Gemisch mit einem jeweiligen Gehalt von 60 Vol. % bzw. 40 Vol.-% bezüglich des Gesamtvolumens des Gemischs vorliegen;
- als Mononitril-Verbindung Butyronitril;
- als Lithiumsalz LiPF₆, und
- die Verbindung der Formel (I) oder die Verbindung der Formel (IIa), wie sie in den Ansprüchen 1 und 11 definiert sind,
wobei die Carbonat-Lösungsmittel und das Butyronitril mit einem jeweiligen Gehalt von 25 Vol.-% bzw. 75 Vol.-% des Gesamtvolumens des aus den Carbonat-Lösungsmitteln und dem Butyronitril gebildeten Gemischs oder umgekehrt vorliegen (nämlich mit einem jeweiligen Gehalt von 75 % bzw. 25 %), und die Verbindung der Formel (I) oder der Formel (IIa) mit einem Gehalt von 2 Masse-% bezüglich der Gesamtmasse der weiteren, den Elektrolyten bildenden Inhaltsstoffen vorliegt.

## Claims

1. An electrochemical cell for a lithium-ion battery comprising:
- a negative electrode comprising, as an active material, silicon;
- a positive electrode; and
- an electrolyte positioned between said negative electrode and said positive electrode, said electrolyte comprising a lithium salt, at least one carbonate solvent, at least one mononitrile compound and at least one compound fitting at least one of the following formulae (I) and (II): 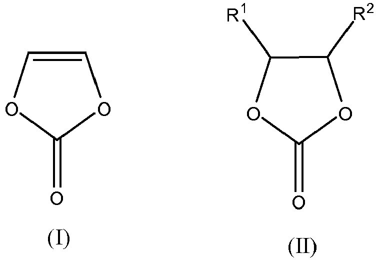 wherein R¹ and R² represent, independently of each other, H, Cl or F, provided that R¹ and R² do not both represent H,
said compound of formula (I) or (II) being present in a content ranging from 0.5 to 10% by mass based on the total mass of the other ingredients forming the electrolyte,
**characterized in that**
said at least one mononitrile compound is a mononitrile compound including at least two carbon atoms outside the group -CN, and
said at least one carbonate solvent is a mixture comprising propylene carbonate and at least one linear carbonate selected from diethyl carbonate, ethyl methyl carbonate, present in a content from 25 to 75% of the total volume of the electrolyte before adding at least one compound of formula (I) or (II) as defined above.

2. The electrochemical cell according to claim 1, wherein the positive electrode is an electrode comprising as an active material, a material for inserting lithium of the lithiated oxide type comprising a transition metal element.

3. The electrochemical cell according to claim 1 or 2, wherein the positive electrode comprises as an active material, a material for inserting lithium of the oxide type comprising nickel, cobalt, manganese and/or aluminium.

4. The electrochemical cell according to claim 3, wherein the oxide comprising nickel, cobalt, manganese and/or aluminium fits the following formula (III):
LiM²O₂ (III)
wherein M² is an element selected from Ni, Co, Mn, Al and mixtures thereof.

5. The electrochemical cell according to claim 3 or 4, wherein the oxide comprising nickel, cobalt, manganese and/or aluminium is selected from LiCoO₂, LiNiO₂ Li(Ni,Co,Mn)O₂, Li(Ni,Co,Al)O₂, Li(Ni,Co,Mn,Al)O₂.

6. The electrochemical cell according to any of the preceding claims, wherein said at least one carbonate solvent is a binary eutectic mixture comprising propylene carbonate and ethyl methyl carbonate, propylene carbonate and ethyl methyl carbonate being present in the mixture in respective contents of 60% by volume and 40% by volume based on the total volume of the mixture of carbonate solvents.

7. The electrochemical cell according to any of the preceding claims, wherein the lithium salt is selected from the group formed by LiPF₆, LiClO₄, LiBF₄, LiAsF₆, LiCF₃SO₃, LiN(CF₃SO₂)₃, LiN(C₂F₅SO₂), lithium bistrifluoromethylsulfonylimide LiN[SO₂CF₃]₂ and mixtures thereof.

8. The electrochemical cell according to any of the preceding claims, wherein the lithium salt is LiPF₆.

9. The electrochemical cell according to any of the preceding claims, wherein the mononitrile compound is butyronitrile.

10. The electrochemical cell according to any of the preceding claims, wherein the mononitrile compound is present, in the composition, in a content which may range up to 75% by volume based on the total volume of the electrolyte.

11. The electrochemical cell according to any of the preceding claims, wherein a specific compound entering the definition of the compounds of formula (II) is the compound of the following formula (IIa):

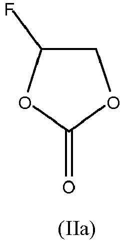

12. The electrochemical cell according to any of the preceding claims, wherein the electrolyte comprises:
- as carbonate solvents, a mixture comprising propylene carbonate and ethyl methyl carbonate, the propylene carbonate and ethyl methyl carbonate being present in the mixture in respective contents of 60% by volume and 40% by volume based on the total volume of the mixture;
- as a mononitrile compound, butyronitrile;
- as a lithium salt, LiPF₆; and
- the compound of formula (I) or the compound of formula (IIa) as defined in claims 1 and 11,
the carbonate solvents and the butyronitrile being present in respective contents of 25% and of 75% of the total volume of the mixture formed by the carbonate solvents and the butyronitrile or vice versa (i.e. respective contents of 75% and 25%) and the compound of formula (I) or of formula (IIa) being present in a content of 2% by mass based on the total mass of the other ingredients forming the electrolyte.
